# EUROPEAN PATENT SPECIFICATION

(11) **EP 0 689 639 B1**
(45) Date of publication and mention of the grant of the patent: **25.06.1997**
(21) Application number: 94910358.4
(22) Date of filing: 15.03.1994
(51) Int. Cl.: F01N 3/02

(54) **A FLUE GAS FILTER COMPRISING A HEATING ELEMENT POSITIONED IN THE AXIAL INTERSTICE BETWEEN TWO FILTER SEGMENTS**
RAUCHGASFILTER MIT EINEM HEIZELEMENT, DAS IN EINEM AXIALEN ZWISCHENRAUM VON ZWEI FILTERSEGMENTEN ANGEBRACHT IST
FILTRE DE GAZ DE COMBUSTION COMPRENANT UN ELEMENT CHAUFFANT PLACE DANS L'INTERSTICE AXIAL ENTRE DEUX SEGMENTS DE FILTRE

(30) Priority: 15.03.1993 DK 290/93
(43) Date of publication of application: 03.01.1996
(73) Proprietor: Stobbe, Per, DK-2800 Lyngby (DK)
(72) Inventor: Stobbe, Per, DK-2800 Lyngby (DK)
(74) Representative: Plougmann, Vingtoft & Partners A/S
(86) International application number: DK9400108
(87) International publication number: WO9421900

(56) References cited:
- EP-A- 0 270 990
- WO-A-89/09648
- WO-A-93/13303

## Description

The present invention concerns an electrically regenerated flue gas filter, in particular for filtering exhaust gas from diesel engines, the filter having improved regeneration characteristics.

The filter bodies of flue gas filters are conventionally made in a single piece with an electrical heating element positioned at the outer surface of the filter body, such as along the circumference thereof. However, this arrangement incurs loss of thermal energy from the filter system as the heat delivered from one side of the heating element is transferred to the surroundings through a thermally insulating layer.

One solution to the above problem may be seen from US-A-4,662,911 where a heating element is incorporated in a pre-filter placed upstream of the flow of the flue gas of the main filter body. This heating element is embedded in the pre-filter so as to avoid loss of heat to the surroundings. However, as the heating element is positioned outside the main filter body, heating of the most remote part of the main filter body will take a long time, as the heat from the heating element must pass through part of the pre-filter and all of the main filter body.

A different approach, which is disclosed in WO 93/13303, is to use filter bodies which are electrically conductive and which, thus, may themselves form the heating element when connected to a power supply. However, most conductive materials suggested for filter bodies either have rather unsatisfactory thermal properties (this applies to metals, which have a too low melting point compared to the temperature reached during regeneration) or (as far as ceramics, such as SiC, are concerned) show conductivity properties which are not optimal, such as a large variation of the electrical conductivity over the temperature range from 20 to 550°C. Also, obtaining a high quality and durable electrical connection to ceramic materials such as SiC is not easy due to their porous and semi-conductive character.

The preferred dimensions of the filter bodies are typically defined by flow characteristics of the flue gas and the size of the engine delivering the flue gas. It is difficult to find materials which, when the filter body has a shape suitable for the engine in question, have an electrical resistance suitable for the power supply. The electrical resistance of the heating element will define the load on the power supply.

It is, of course, preferred to be able to select the dimensions of the filter body which are most suitable for the actual engine in question.

According to the invention, the above problem is solved by a flue gas filter, in particular for filtering exhaust gas from diesel engines, comprising a casing having an exhaust gas inlet and an exhaust gas outlet and a filter body arranged in the casing, the filter body being composed of at least two segments which are of a porous heat-resistant material and which extend in the axial direction of the casing, the filter segments being arranged adjacent to each other, and an electrical heating element being arranged in at least one axial interstice between adjacent filter segments.

By having the filter body partitioned into a number of filter segments, it is possible to place the heating element(s) between the filter segments. The heat generated by the heating element is thus delivered almost entirely to the filter segments; in other words, the heat is delivered where it is desired. As will be understood, the axial direction of the casing corresponds to the overall direction of the flow of the flue gas.

Splitting up the filter body into a number of filter segments is known per se from JP Kokai 3-121213, where the filter body is partitioned to avoid cracking of the filter body due to thermal cycling of the filter body. Heating of this filter body takes place via a heating element contacting the end of the filter body.

According to the invention, it may be preferred to have an electrical heating element arranged in each axial interstice between adjacent filter segments so as to obtain a maximum heating surface of the filter segments and a homogeneous heating of the filter segments, thereby reducing thermal stresses.

Naturally, also in filters according to the invention, part of the heat generated by the heating elements will escape to the surroundings, even where the filter body is surrounded by a thermally insulating material. However, in the flue gas filter of the invention, the heat is generated inside the filter body and is transported through the filter segments to the outer surfaces thereof contacting the thermally insulating material. This means that the surface heating the thermally insulating material is the coldest surface of the assembly of the filter segments and the heating elements, whereby the loss of heat to the surroundings is much lower compared to systems having a heating element directly contacting the thermally insulating material.

Many types of heating elements may be used in the filter according to the invention. However, it is preferred that the heating element is an electrical heating element comprising a metallic resistance heating means. The metallic resistance heating means may be made of any kind of suitable metal or alloy able to withstand the temperatures generated during regeneration of the filter segments.

In order to assure that no electrical short circuits are generated during operation of the filter, such as short circuits between electrically conductive filter segments and the power conducting resistance heating means, it is preferred that the metallic resistance heating means is enclosed in electrically insulating material.

The electrically insulating material may constitute a heat-conductive coating of the metallic resistance heating means. The thermal conductivity of this coating is preferably at least 1 W/mK, such as, e.g., 1-20 W/mK, in order to obtain sufficient transport of the heat from the metallic resistance heating means to the filter segments. A heat-conductive coating of this type may comprise a ceramic material, such as magnesia, alumina, zirconia or any combination thereof. Electrical heating elements comprising such a coating may be used in the form of plate-shaped elements or in the form of, e.g., thin pipe heating elements.

Instead of forming the electrically insulating layer on the heating element, the electrically insulating material may be at least partially constituted by an electrically insulating surface of a filter segment. In this case, the electrical heating element may suitably comprise a flexible metallic resistance heating element having a round or polygonal cross section, such as a substantially circular or substantially square cross section, and being in heat-conductive contact with electrically insulating surfaces of adjacent filter segments. Examples of suitable flexible metallic resistance heating elements are a coiled wire and knitted threads. In order to keep such a metallic resistance heating means together or to strengthen it, the electrical heating element may comprise a flexible core material, such as a fibrous material, e.g. a fibrous ceramic or metallic material.

Alternatively, the resistance heating means may be constituted by a conductive plate or foil, in particular a metal plate or foil, which is optionally cut or cauterized into a meandering or labyrinth pattern and, in most embodiments, embedded in an electrically insulating material. When using this type of resistance heating means, the total electrical resistance and, thus, its power consumption, may be altered by altering the pattern, i.e. the length, or the cross sectional area of the heating means. A smaller cross sectional area or a longer resistance heating means will give a higher electrical resistance, a higher power consumption and a higher heat generation.

The segments of the filter body preferably have a cross sectional shape substantially as a circle sector, the segments together cross-sectionally substantially constituting a circle. The overall circular cross section is preferred, as this is generally the preferred cross sectional shape of flue gas filters, such as diesel filters. Naturally, the filter segments may alternatively have other cross-sectional shapes, but the cross-sectional shapes should, of course, be so adapted that they define suitable interstices for incorporation of the heating elements.

Preferably, the number of segments is an even number larger than two. A preferred number of filter segments is four. As it is preferred to have all filter segments of the same shape, each segment preferably has a cross section as a circle quadrant.

To obtain optimum heating of the filter segments, each filter segment should be placed in heat-conductive contact with a heating element along each of its radially extending faces. In the case of four substantially identically shaped filter segments, the heating element may have a cross section of a substantially symmetric right-angled cross.

In one embodiment, each heating element has an angular cross section, the angle corresponding to the angle between the radial faces of the corresponding filter segment. In this case, one filter segment is in male-female relationship with one heating element, the two adjacent filter segments each being heated on one side by the same heating element. If the number of heating elements is half the number of segments, and if the heating elements embrace every circumferentially second filter segment, all radially extending surfaces are heated.

If the heating elements are shaped as e.g. round thread or pipe elements, it is preferred that at least one of two opposite radial faces of two adjacent filter segments has indentations receiving the round heating elements. Thus, the surface structure of the adjacent filter segments will prevent displacement of the heating element. Normally, two opposite radial faces of two adjacent filter segments will have matching indentations receiving the heating elements.

Any type of filter segment may be used in a filter according to the invention. However, filter segments made of a porous ceramic material are often preferred, as certain ceramic materials have superior characteristics compared to other materials.

The porous ceramic material is preferably a particle-based ceramic material in which the pore size is substantially determined by the size of the particles. This type of material is easy to produce, e.g. by extrusion and sintering, and the porosity and pore size of the material, which define the filtering characteristics of the filter segment, are directly controlled by the starting materials.

The presently preferred particle-based ceramic material is SiC, which is stable at high temperatures and in the presence of flue gasses. SiC has a high decomposition temperature, whereby melt-down of the filter segments is prevented. More advantages of this material are discussed in Example 6.

The preferred structure of the filter segments is a structure wherein one of the axial faces of each filter segment constitutes a gas inlet side surface, the opposite axial face constituting a gas outlet side surface, a first plurality of blind filtration cavities extending into the filter segment from the gas inlet side surface and a second plurality of blind filtration cavities extending into the filter segment from the gas outlet side surface, the blind filtration cavities of the first and second pluralities being arranged spaced apart and mutually juxtaposed.

In this structure, the soot containing flue gas flows into the first plurality of cavities, through the porous walls separating the first and second pluralities of cavities and out through the second plurality. When the filtering characteristics of the porous material are properly selected, the gas may flow through the walls while the soot particles are retained in the filter segments.

In order to have optimum flow characteristics of the filter segments, the blind filtration cavities are substantially parallel to the longitudinal axis of the filter segment.

The invention will now be further described with reference to the drawing, wherein
Fig. 1 is a cross sectional view of a first embodiment of a flue gas filter according to the invention employing a filter body comprising four filter segments and four electrical heating elements,
Fig. 2 is a perspective view of an electrical heating element for use in the flue gas filter of Fig. 1,
Fig. 3 is a cross sectional view of a second embodiment of a flue gas filter according to the invention employing a filter body comprising four filter segments and two electrical heating elements,
Fig. 4 is a perspective view of an electrical heating element for use in the flue gas filter of Fig. 3,
Fig. 5 illustrates a suitable pattern of a metallic resistance heating means in the electrical heating elements of Figs. 2 and 4,
Fig. 6 is a cross sectional view through line A-A of Fig. 3 of the second embodiment of a flue gas filter according to the invention illustrating another suitable pattern of a resistance heating means,
Fig. 7 is a cross sectional view of a third embodiment of a flue gas filter according to the invention employing a filter body comprising four filter segments and one electrical heating element,
Fig. 8 is a perspective view of an electrical heating element for use in the flue gas filter of Fig. 7,
Fig. 9 is a cross sectional view of an element, two of which may suitably form the electrical heating element of Fig. 8,
Fig. 10 is a cross sectional view of a fourth embodiment of an electrical heating element for use in a flue gas filter according to the invention,
Fig. 11 is a cross sectional view of a fifth embodiment of an electrical heating element for use in a flue gas filter according to the invention,
Fig. 12 is a cross sectional view of a flue gas filter according to the invention comprising a filter body comprising four filter segments and being adapted to receive a heating element having a substantially circular cross section,
Fig. 13 is a side view of a filter segment suitable for use in the flue gas filter of Fig. 12, and
Fig. 14 illustrates the filtering principle of a honeycomb filter.

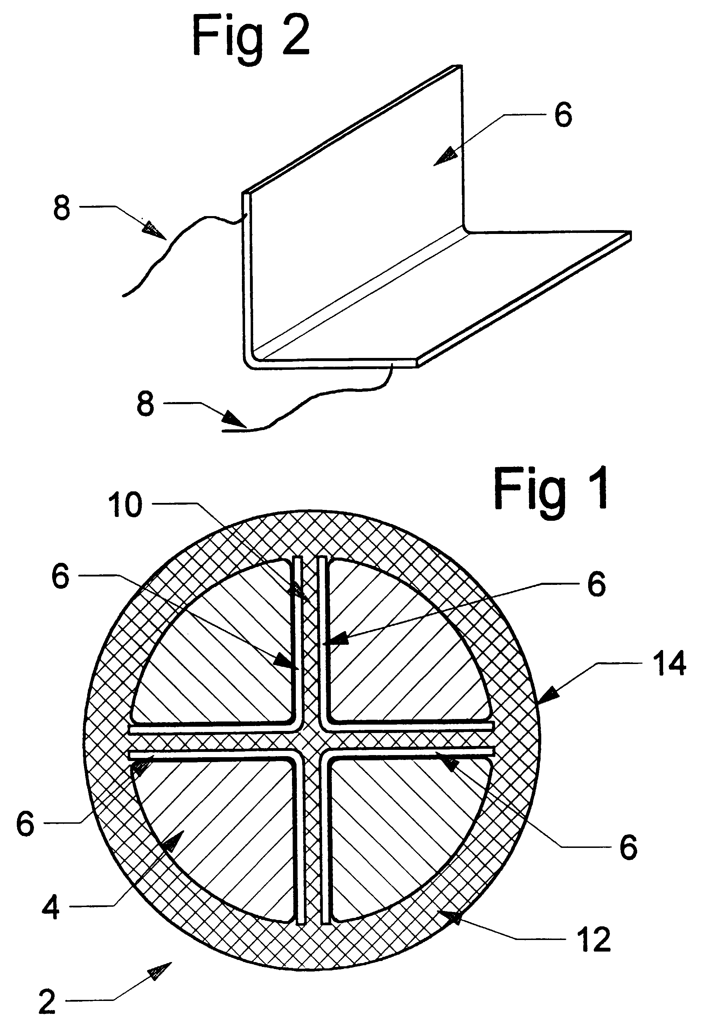

Fig. 1 illustrates a first embodiment of a flue gas filter 2 according to the invention. This flue gas filter incorporates a filter body comprising four filter segments 4 each in thermal contact with an electrical heating element 6. It is seen that the heat generated in the electrical heating elements 6 is delivered in the inner parts of the flue gas filter 2 so that loss of heat to the surroundings is considerably reduced compared to filters incorporating a heating element surrounding the filter segments. Fig. 2 is a perspective view of the heating element 6.

The filter 2 comprises four identically shaped filter segments 4, each having the shape of a quarter of a circle, and four identically shaped heating elements 6 shaped so as to fit the inner, radially extending parts of the segments 4. The filter segments 4 are preferably made of a honeycomb-shaped porous ceramic material, such as an extruded and sintered material manufactured as described in Example 6. Each of the heating elements are supplied with electrical connections for connecting the heating element 6 to a power source (not shown).

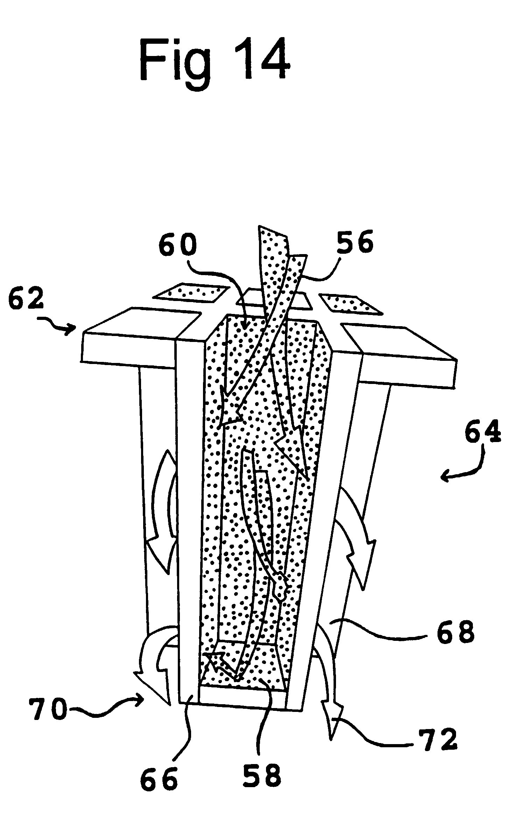

A cross sectional perspective view of a honeycomb structured filter segment may be seen from Fig. 14. It is seen that flue gas, designated by arrows 56, containing soot particles 58 enters a channel 60 open at a flue gas inlet side surface 62 of the filter segment 64. The flue gas 56 passes through the porous partition walls 66 of the segment 64 and enters channels 68 open at a flue gas outlet side surface 70 of the segment 64 as filtered gas, designated by arrows 72. When the pore size of the porous walls 66 is properly selected compared to the typical size of the soot particles 58, the soot particles will be prevented from travelling with the gas through the walls 66. The soot particles 58 will, thus, remain in the filter segment 64 until this filter segment 64 is heated and the soot 58 combusted.

If a filter segment 4 was made of an electrically conductive material and if a heating element 6 was positioned adjacent to the filter segment 4 so that the power transmitted into the heating element 6 was able to travel to the filter segment 4, a reduced heat generation would be observed in the heating element 6 due to loss of power to the filter segment 4. This may be avoided in a number of ways. One way is to supply the heating element 6 with an electrically non-conducting surface so that electrical power cannot leave the element 6. Another way of avoiding the loss of power is to make the surface of the filter segment 4 less electrically conductive. If e.g. the filter segment 4 was manufactured as described in Example 6, which means that the filter segment 4 was made of the electrically conductive ceramic material SiC, the SiC at the surface of the filter segment 4 could be doped with impurities, such as B or Al. This doping of the SiC at the surface of the filter segment 4 will reduce the electrical conductivity of the surface without reducing the thermal properties of the SiC.

If two heating elements 6 touch during heating, these elements 6 may not be able to deliver all the thermal energy generated. The elements 6 will thus obtain excess temperatures which may damage the heating elements 6. In order to avoid having the heating elements 6 touch each other, a layer of a heat insulating material 10, such as Interam®, is inserted between the individual heating elements 6. This layer 10 will also aid in gas-tightening the interstice between the heating elements during operation of the filter 2.

In the embodiment of Fig. 1, it may be preferred to omit the thermally insulating layer 10 and two diametrically positioned heating elements 6. In this case, only two diametrically positioned heating elements 6 are present in the filter 2, and these heating elements 6 are contacted by filter segments 4 on both sides. In this embodiment, the heating elements 6 supply heat to both sides of the heating element 6.

In order to avoid loss of thermal energy to the surroundings, the filter segments 4 and the heating elements 6 are embedded along the circumference in a layer 12 of a thermally insulating material, such as Interam®, before being canned in a can 14 holding the filter 2 during operation.

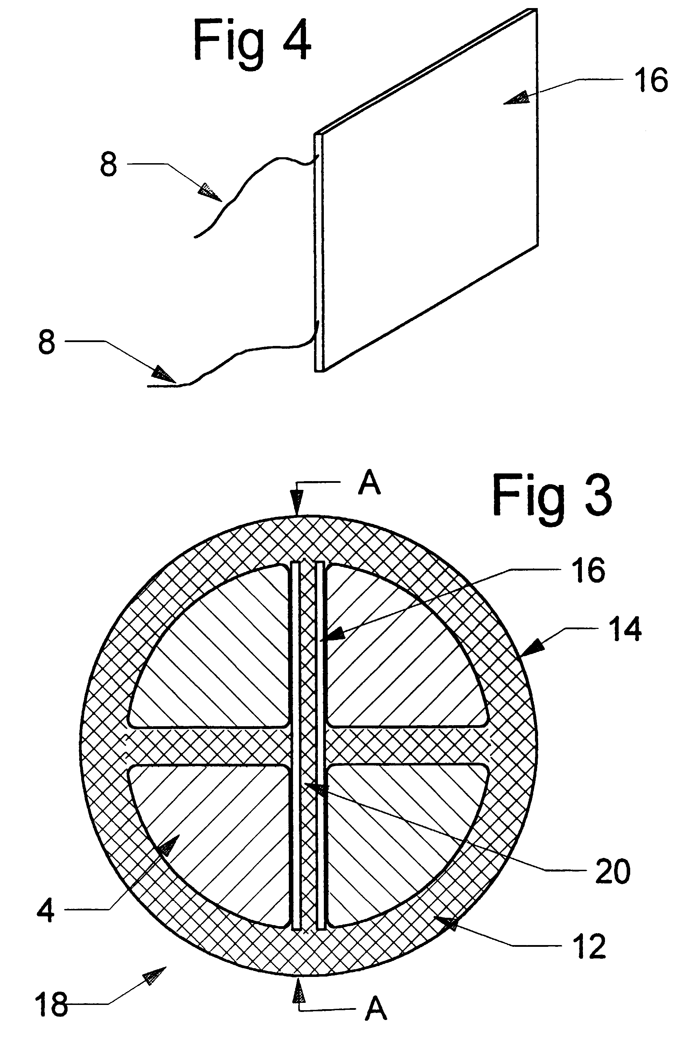

Another embodiment of a flue gas filter 18 according to the invention is seen in Fig. 3. A heating element 16 suited for use in the filter 18 is seen in Fig. 4

This filter 18 uses four filter segments 4 as seen in Fig. 1. The filter segments 4 are each contacted on one radially extending side by one of two heating elements 16. The two heating elements 16 are separated by a layer of a thermally insulating material 20 and a layer of a thermally insulating material is preferably introduced between the filter segments 4 at the radially extending surfaces not contacted by the heating elements 16 in order to have a substantially circular outer circumference of the filter segments 4 and the heating elements 16; This will ease canning of the elements 4, 16 and 20 in the can 14.

Similar to the embodiment of Fig. 1, it may be preferred to omit the layer 20 and one of the heating elements 16 so as to have only one heating element 16 contacting all filter segments 4 in the filter 18. In this way, only a small layer of material is required between the radially extending sides of the filter segments 4 not contacting the electrical heating element 16 in order to have a substantially circular circumference of the elements 4 and 16.

As in Fig. 1, the elements 4, 16 and optionally 20 are surrounded by a layer 12 of a thermally insulating material in order to reduce loss of thermal energy to the surroundings.

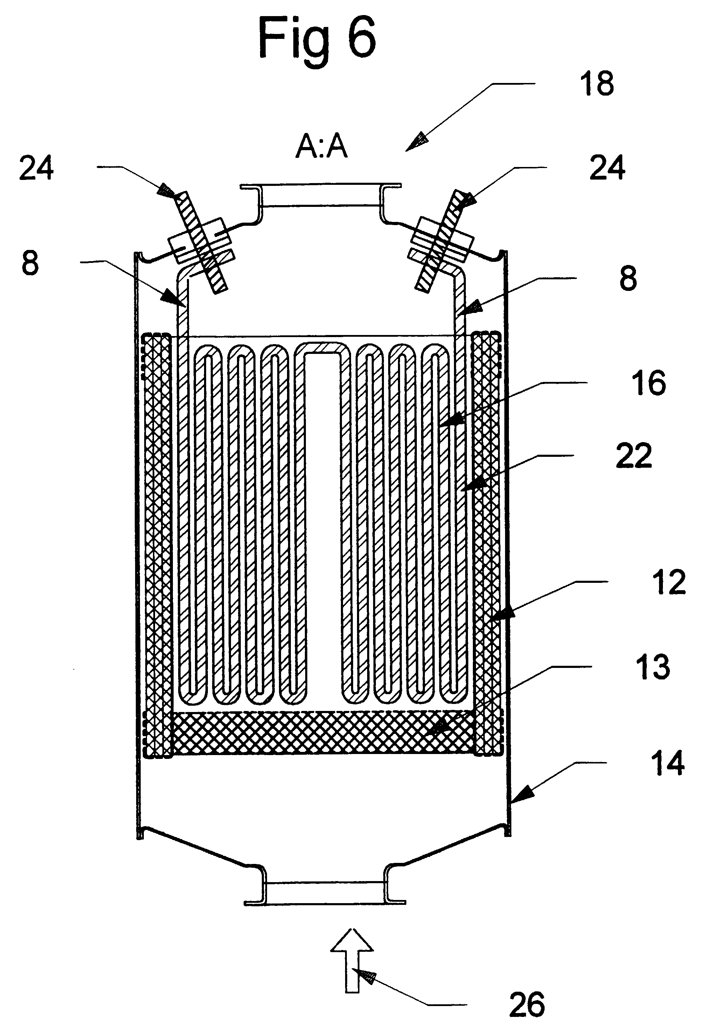

Fig. 5 illustrates a example of a pattern of a metallic resistance heating means 33 in the electrical heating elements 6 and 16 of Figs. 2 and 4. The actual pattern of the resistance heating means 33, e.g. meandering, will determine the extent of homogeneity with which the heating of the filter segments 4 takes place.

Fig. 6 is a cross sectional view along the line A-A of the flue gas filter of Fig. 3. It is seen that the layer 12 of thermally insulating material is positioned between the heating element 16 and the can 14.

The heating element 16 comprises a resistance heating means 22 which is positioned inside the heating element 16 and which through electrical connections 8 and through connectors 24 are connected to a power supply (not shown) positioned outside the filter 18.

Depending on the surfaces of the filter segments 14 and the heating elements 6 and 16, a filter as seen in Figs. 1 and 3 may not be sufficiently sealed to avoid leakage of gas between the heating elements 6 and 16 and the filter segments 4. Leakage in the areas of the filter where the layers 10, 12 and 20 of thermally insulating material are used may be reduced by employing a thermally insulating and thermally expanding material, such as Interam®, which will expand during use and regeneration of the filter segments 14 in the filter 2, 18 and, thus, seal these parts of the filter 2, 18.

When the filter segments 4 and the heating elements 6, 16 have hard surfaces, and when it is not desired to have a sealing material therebetween due to the thus lower thermal contact between the heating elements 6, 16 and the filter segments 4, gas tight sealing is preferably obtained as described below.

A preferred embodiment of a leakage sealing may be seen from Fig 6, where the heating element 16 is chosen to have a length shorter than that of the filter segments 4 (which is substantially equal to the length of the layer 12). The filter segments 4 and the heating element(s) 16 are aligned at one end of the filter 18, preferably at the gas output end of the filter 18 (the flow direction of the gas is given by arrow 26). The interstice between the filter segments 4, at the gas inlet end of the filter 18, in which the heating element(s) 16 is not present, is subsequently filled by a thermally insulating, preferably thermally expanding, material 13 so as to form a gas seal between the filter segments 4. At this end of the filter 18 there is no interface between the filter segments 4 and the heating elements 16 but only filter segments 4 and the thermally insulating material 13. In this manner, a suitable sealing of the filter 18 may easily be provided.

Naturally, the above sealing method may also be used in connection with the first embodiment of the filter 2 of Fig. 1.

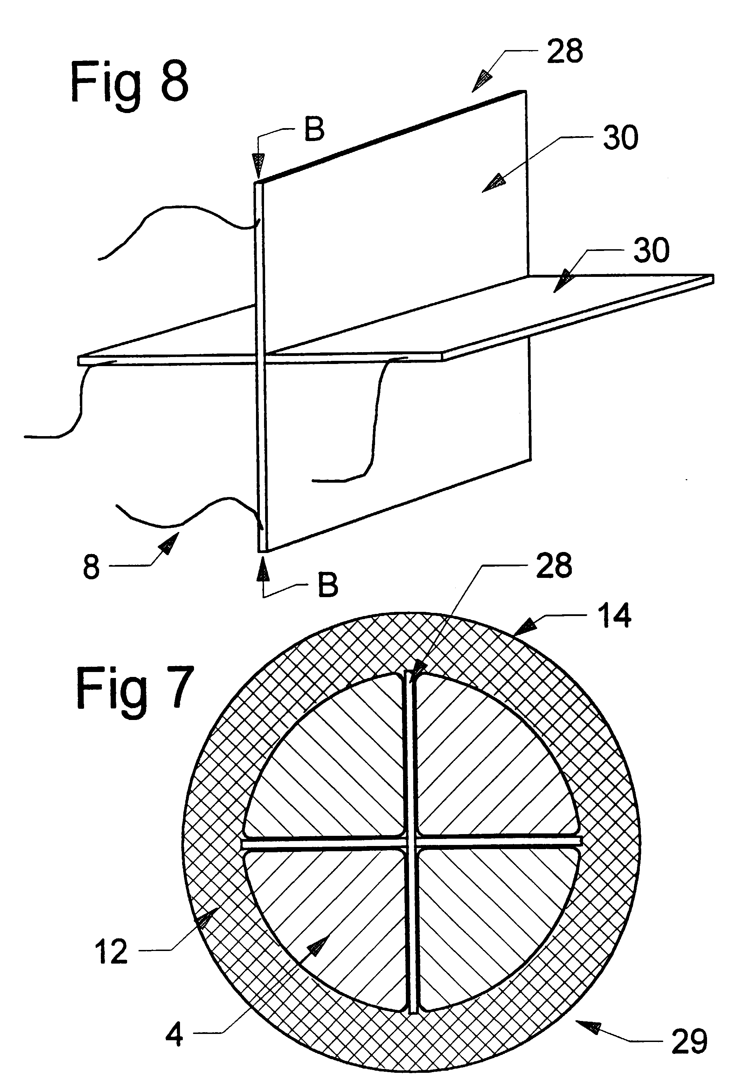

Fig. 7 shows a third embodiment of a filter 29 according to the invention. A heating element 28 suited for use in the filter 29 is shown in Fig. 8.

The filter 29 incorporates four filter segments 4 as seen in Fig. 1, and the heating element 28 has a cross section as a substantially right angled cross so as to fit between the four filter segments 4. Again the elements 4 and 28 are surrounded by a thermally insulating layer 12 and canned in a can 14.

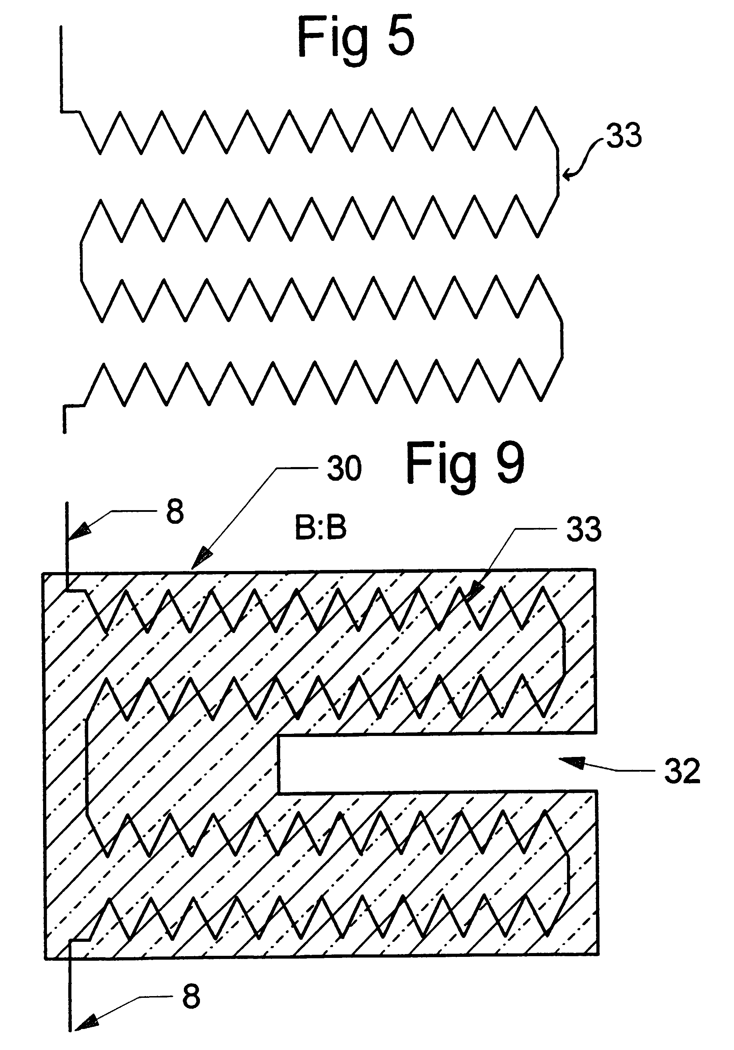

The heating element 28 may be manufactured in a number of ways. One of these ways is manufacturing the heating element 28 from two elements 30 which may be assembled to form the heating element 28. The elements 30 may be of the type shown in Fig. 9 in a cross section along line B-B in Fig. 8. The element 30 has an incision 32 of a width larger than the thickness of the element 30 and a length which should be longer than half the length of the element 30. Two elements of this type will form a cross which, when properly sized, will fit between the four filter segments of Fig. 8.

The elements 30 of Fig. 9 preferably each comprises a resistance heating means 33 and electrical connections 8. The actual pattern of the means 33 on the elements 30 will depend on e.g. the material of the means 33. Fig. 9 further illustrates suitable pattern of the resistance heating means 33 when the means 33 are formed from a sheet or plate of an electrically conducting material. Naturally, in order that the two elements 30 have the electrical connections 8 at the same end of the heating element 28, as is the case in Fig. 8, the two elements should have the electrical connections 8 at different ends.

The above-mentioned sealing technique where the heating element is shorter than the filter segments and where a sealing layer is used to ensure a sufficiently low gas leakage, may also be used in the present embodiment.

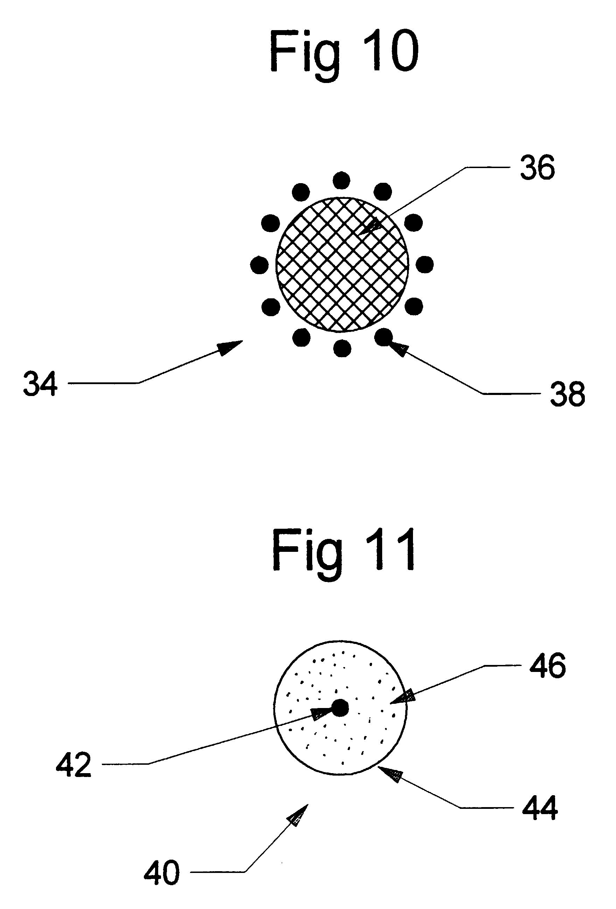

Fig. 10 is a cross sectional view of a heating element 34 having a substantially round cross section and comprising a core wire 36 surrounded by a number of smaller wires or threads 38. The wires 38 may be e.g. knitted around the wire 36 so as to keep the wires 38 in place during operation and bending. The threads 38 may alternatively be substituted by a thin layer of an electrically conductive material.

When the core wire 36 is a flexible high-temperature-withstanding material, such as a fibrous or thread-like material, and when the outer wires 38 are flexible, the heating element 34 is flexible and may be bent, prolonged and compressed. This flexible element 34 may alter its cross section to a more elliptical cross section when e.g. compressed between two filter segments. When the flexible element 34 is e.g. compressed between two filter segments, the element 34 is kept in place due to the compression and the friction between the filter segments and the element 34 and will, thus, be more stable during operation.

The electrical resistance of the heating element 34 may be chosen by selecting the materials and the dimensions of the wires 36 and 38. It may be preferred that the wire 36 has a very low electrical conductivity so that the heat is generated mainly in the wires 38.

As the heating element 34 will be hot during regeneration of the filter body, it may be preferred to have a higher electrical conductivity at the ends of the heating element 34 where the heating element 34 is connected to a power supply (not shown). This higher electrical conductivity will reduce the heat generation in these parts of the heating element 34, whereby contact thereto may be made without danger of destroying the electrical connections connected to the ends of the heating element 34. This higher electrical conductivity may e.g. be obtained by applying two or three times the number of wires or threads 38 at the ends of the heating element 34 or by increasing the thickness of the wires 38 at the ends of the element 34.

Fig. 11 illustrates a cross section of an other embodiment of a heating element 40 having a substantially circular cross section. This filter element 40 comprises a resistance heating means 42 in the centre of the heating element 40. The means 42 is positioned within a tube 44 and a heat conducting and electrically insulating material 46, such as a powder, is positioned between the means 42 and the tube 44 in order to conduct the heat from the means 42 to the surface of the heating element 40 while electrically insulating the surroundings and the tube 44 from the means 42. This type of heating element may be seen in e.g. water heaters.

This type of heating element 40 is, as is the case with the heating element 34 of Fig. 10, flexible, and it may be bent in substantially all shapes suitable for a heating element in a filter according to the invention.

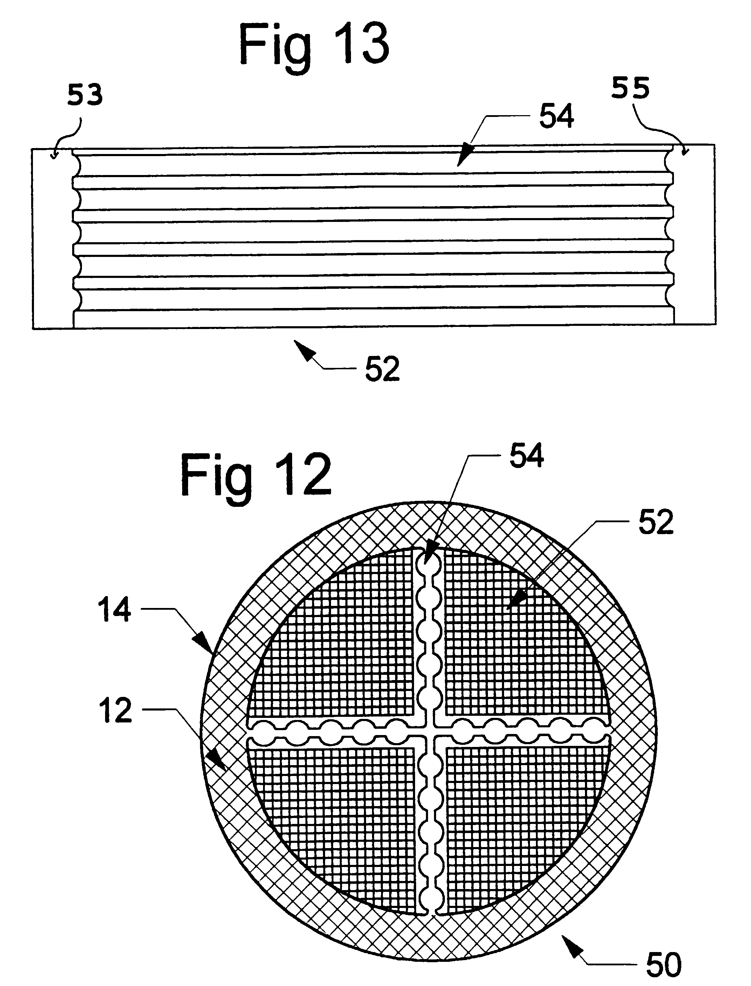

A cross section of a filter 50 according to the invention which is adapted to receive heating elements of the types shown in Figs. 10 or 11 appears from Fig. 12, and a suitable filter segment 52 for use in the filter 50 is shown in Fig. 13.

From Fig. 12 it is seen that the filter segments 52 have grooves 54 in the radially extending surfaces for receiving heating elements having a substantially circular cross section. The grooves and the shape of the heating elements may naturally be chosen to be other than circular, such as square, triangular, etc.

In the filter 50 of Fig. 12, the filter segments 52 (See Fig. 13) have grooves 54 parallel to the axis of the filter segments 52. The grooves 54 preferably do not to extend along the whole of the length of the filter segments 52; In order to allow the heating element 34, 40 to bend at the ends of the filter segments 52 without extending beyond the ends of the filter segments 52, the grooves 54 are not present at the ends 53 and 55 of the filter segments 52 (See Fig. 13).

Thus, the heating element 34, 40 of the filter 50 may follow a meandering path through the grooves 54 of the filter segments 52 and bending outside the grooves.

The filter segments of 52 may be manufactured in any suitable way, such as casting, injection moulding and by extrusion. Extrusion is the presently preferred manufacturing method as the filter segment 52 may easily be extruded to have the cross section seen in Fig. 12, whereafter the material forming the grooves 54 at the ends 53 and 55 of the segment 52 is removed, the channels of the honeycomb structure are closed in a manner known per se, and the segments 52 are dried and sintered as e.g. described in Example 6.

Naturally, the above-mentioned preferred way of gas sealing the filter by choosing the length of the filter segments 52 larger than that of the heating element and by adding a sealing material at one end of the filter may also be used in this embodiment of the filter according to the invention.

The invention is further illustrated by the following examples.

### EXAMPLE 1

Particle filter systems used on vehicles are typically sized according to the size of the engine of the vehicle. These particle filter systems, used on e.g. fork lift trucks, are normally not able to contain the total amount of soot filtered from the exhaust gas during a whole days work without generating an unacceptably high back pressure. Thus, the filter system should be regenerated at least once during a working day. In order not to slow down the work of the fork lift truck and its driver, this regeneration could take place during e.g. the driver's lunch break. Thus, the regeneration of the filter system should take place in less than e.g. 30 minutes. No other presently commercially available filter systems are able to regenerate during this small time interval.

When regenerating the present system, a 220 V or a 380 V power supply may be used. Additionally, an air pump supplying air, such as a compressed air supply, and thus oxygen to the regenerating filter system may be used in order to further speed up the regeneration time of a filter system.

A system was manufactured having a filter body comprising a set of four identically sized filter segments of the type described in Example 6 (See also WO 93/13303) and having a cross section substantially being a circle quadrant, as seen in Fig. 1, and a heating element according to the present invention having the shape of a cross fitting between the filter segments (See Fig. 7). The filter body has a total volume of 6 litres.

The present heating element was manufactured by coiling two Ni/Cr metal wires, having a diameter of 1 mm, into springs having an outer diameter of 9 mm. These metal coils form the resistance heating means and will heat the heating element once connected to a power supply. Each metal coil was cast into Aluminum Oxide cement to form two elements of the type seen in Fig. 9 having wall thicknesses of 12-15 mm in which the coils were totally embedded except for four connecting wires for the power supply. The coils were each placed in a suitable mould whereafter the cement was added and allowed to dry.

When assembled, the two elements formed a cross-shaped heating element having a length of 250 mm, four legs each of a length of 85 mm and comprising two heating springs embedded in an electrically insulating material.

Due to the outer surface of the heating element being made of an electrical insulator, the filter segments, which in this embodiment are made of an electrically conducting material (SiC), may be placed in direct contact with the heating element without loss of electrical power from the heating element to the filter segments. In order to thermally isolate the filter segments from the surroundings, a layer having a thickness of 2 x 6.5 mm of Interam® (a Vermiculite-based heat expanding material) was placed around the assembled elements before fitting these into a container made of e.g. stainless steel, such as a high Cr low Ni content material with a relatively low thermal expansion coefficient, such as in the order of 12-13·10⁻⁶m/K.

The total impedance of each of the two resistance heating means was 24Ω giving a total power consumption of 2 x 2 kW for the two resistance heating means connected in parallel in the heating element and when using a 220 V AC power supply.

Due to the favourable position of the heating element, the filter segments in the present filter system could be heated from room temperature (20°C) to regeneration temperature (550°C) in 28 minutes when using a 220 V power supply.

The regeneration of the filter body takes place by heating the filter segments to a temperature where the collected soot reacts with oxygen and forms Carbon dioxide and water. This regeneration temperature is in the order of 550°C when performed in an atmosphere containing 21% oxygen. As the regenerating filter segments are typically positioned in the exhaust system of a vehicle in a position where the only connection to the atmosphere is through the exhaust pipe, the available amount of oxygen may be quite small. Thus, the regeneration of the heated filter body is typically controlled by the supply of oxygen.

In a system where the supply of oxygen is small, the regeneration of the filter segments may take e.g. an hour. However, if air is introduced between the manifold and the filter system, such as in an amount of in the order of 150 l/min, the regeneration may take place in a relatively smaller time interval, such as 5 minutes, due to the increased supply of oxygen. Thus, by regulating the supply of air introduced in the filter segments, the regeneration speed may be controlled.

Naturally, if air is led through the filter segments when these are heated, the air will be heated and, thus, the filter segments will be cooled. Therefore, it is preferred that air is not supplied until the filter segments have reached a temperature where the regeneration can take place.

### EXAMPLE 2

A filter system of the type described in Example 1 comprising the same number and type of filter segments was equipped with two plane heating elements of the type seen in Figs. 3 and 4.

Each heating element was manufactured by cauterizing a 0.3 mm thick Kanthal Ni/Cr metal alloy foil to create a thin heating element. Cauterization may be performed in much the same way as making circuits on a printed board for use in electronics. Any suitable pattern may be used, such as a meandering or labyrinth pattern as seen in Figs. 5, 6 and 9.

The cauterized foil was placed between two sheets of Mica, which is a mineral based on Muscovite, together with an organic binder for holding together the heating element before introduction into the filter system. The organic binder may either be allowed to dry under pressure at room temperature or the heating element may be placed under pressure in an oven at e.g. 150°C in order to have the binder dry more quickly.

The final heating element was shaped as a board having a thickness of 3 mm and side lengths of 175 mm and 250 mm. As in Example 1, the outer surface of the heating element is an electrical insulator whereby the heating element may be placed in direct contact with electrically conducting filter segments. The electrical resistance of each heating element was 24 Ω giving a power consumption of 2 kW when connected to a 220 V AC power supply.

The two heating elements and the four filter segments were arranged as seen in Fig. 3. The heating elements were separated by a layer of Interam® having a thickness of 6.5 mm. The assembled elements were thermally isolated from the surroundings by a layer of Interam® of a thickness of 18 mm before fitting into a stainless steel container.

The filter segments of a system of this type may be heated from room temperature (20°C) to regeneration temperature (550°C) in 20 minutes consuming 4 kW, when the two heating elements are connected in parallel to a 220 V AC power supply.

The difference in heating times between the filters of Example 1 and Example 2 is mainly due to different thicknesses (and the weights) of the electrically insulating layers between the resistance heating means and the filter segments in the two embodiments.

### EXAMPLE 3

It may also be desired to have the filter system regenerated during operation of the vehicle. In this case, the impedance of the heating element should be adapted to a low-voltage power supply.

A set of four filter segments of the type and size described in Example 1 were used together with four heating elements as seen in Fig. 2.

Each heating element was manufactured by cauterizing a 1 mm thick Ni/Cr metal alloy foil into a suitable pattern, such as a meandering or labyrinth pattern. Each heating element had the electrical resistance of 0.24 Ω.

As the presently preferred filter segments are electrical conductors (made of SiC), a layer of 1 mm of a heat-resistant cement, such as one based on Zirconia and Alumina (Hinckley-Sauereisen No. 8), is applied to those sides of the filter segments which are to contact the heating elements so as to form an electrical insulation between the heating elements and the filter segments.

Naturally, the cement should be able to withstand the high temperatures, however, the above-mentioned cement is also interesting as it has a large electrical insulation, a high thermal conductivity and approximately the same thermal expansion coefficient as the SiC in the filter segments (~5.10⁻⁶ mK), which means that cracks due to thermal cycling will be prevented or reduced.

After application and drying of the cement, the heating elements may be applied to the filter segments. The heating elements do not have to be fastened to the filter segments as the relative positioning of the individual elements will be fixed once canned. The individual heating elements were separated by a layer of Interam® having a thickness of 6.5 mm, and the assembled elements were surrounded by a 2 x 6.5 mm layer of Interam® in order to reduce the heat loss to the surroundings.

Furthermore, the above-mentioned cement may be applied in a manner so that the filter segments obtain a surface structure, such as grooves, compatible with the desired shape of the heating element so as to support the heating element during operation.

The heating elements were coupled in parallel two-and-two, whereby two heating elements coupled in parallel obtained a power consumption of 2.4 kW when using a 24 V DC power supply. The filter segments of the filter system, now having a total power consumption of 4.8 kW, were heated from 100°C to 500°C in approximately 16 minutes using a setup wherein the two pairs of heating elements are connected in parallel.

It may be preferred to add control electronics for controlling the power consumption of this filter system in order to secure that the battery of the vehicle is not overloaded. Thus, a maximum limit for the power consumption may be desired. Naturally, this may prolong the regeneration time, however, a compromise between regeneration time and power consumption may easily be made.

### EXAMPLE 4

Another type of heating element may be made by arranging a number of relatively thin metal wires around a core wire, such as one made of an oxide fibrous material (See Fig. 10). The thin wires may be knitted around the core wire so as to hold the core wire together and to keep the thin wires in position during operation.

It may be preferred that the core wire is made of an electrically conducting material, such as one or more strands or threads of a metal material. It may optionally be preferred that the core wire is not electrically conducting and, thus, made of an electrically non-conducting material, such as a ceramic material. The similar situation applies to the thin wires, which may or may not be electrically conducting.

The thin wires may optionally be replaced by a thin coating of a material having the desired properties.

Whether the core wire and/or the thin wires is or is not electrically conducting will depend on the desired total electrical resistance of the heating element and on whether the surface of the heating element is desired to be electrically conducting or not.

The thin wires typically have a diameter of 0.02-2.0 mm, and they are typically made of a Ni and Cr-containing material. The heating element will typically contain 10-300 thin wires. The core wire may also be made of 10-3000 threads or wires of a thickness of 0.02-2.0 mm. The heating element will typically have a length of 1-10 m.

This new heating element is flexible and may be bent in quite small radii, compressed and expanded lengthwise depending on the actual centre wire material. As the heating element is compressible, it adapts very well to the filter segment dimensions and it tolerates and compensates for small manufacturing variations in the size of the filter segments.

Electrical contact to this heating element may be obtained by applying the "metal wire hose" or optionally the conducting core wire in a double, triple or quadruple layer in a length of e.g. 100 mm at each end of the heating element. As the electrically conducting wires are present in more than twice the amount at the ends, the electrical resistance per length at these ends will be lower that of the rest of the heating element. Thus, the heat generation at these "cold ends" will be smaller, thus permitting direct contact between the heating element and electrical cable thimble connections.

This heating element may be shaped in any suitable shape depending on the shape and number of filter segments. If required, electrical insulation between the filter segments and the heating element(s) may be obtained using the Zirconia Alumina cement of Example 3. Additionally, a filter segment especially suited for use in connection with this type of heating element will be described in Example 6

### EXAMPLE 5

Another type of heating element suitable for this type of filter system is the so-called pipe-heating element seen in e.g. water heaters. In this heating element a heating wire is placed in a metal tube, and a Magnesium Oxide powder is positioned between the tube and the wire to thermally connect and electrically insulate the heating wire and the surroundings and the metal tube (See Fig. 11).

The heating wire may be made of e.g. a Ni and Cr- containing material having a diameter of e.g. 0.3 mm. The heating wire may be coiled inside the tube. The metal tube may be made of e.g. Inconel or AISI 316T, or a similar high temperature withstanding alloy, and have an outer diameter of 2-10 mm. The total length of the heating element will depend on a number of features of the filter, however, the length is typically 1-8 m.

This heating element may be bent to any shape suitable in a filter according to the invention.

Two heating elements of the above type suitable for the use in a filter system as seen in e.g. Fig. 12 were manufactured. Each heating element had a length of 2.1 m and comprised a coiled heating wire of a diameter of 0.3 mm, Magnesium oxide powder and a tube of AISI 316T having an outer diameter of 6.5 mm. Two heating elements of this type having a total power consumption of 4 kW are able to raise the temperature of the four filter segments from room temperature to 550 °C in the order of 15 minutes.

### EXAMPLE 6

In this Example, the manufacture of the presently preferred filter segments will be described. The preferred filter segments are made of a ceramic material (SiC) which has a number of superior advantages when positioned in high-temperature flue gas and when exposed to high temperature regeneration where a large amount of soot is combusted.

SiC has a high decomposition temperature (higher than 2000°C) and the preferred filter segment has a high thermal conductivity which together prevent melt-down of the filter segment even during a violent regeneration where a large amount of soot is combusted in a short period of time. Furthermore, SiC is stable in the presence of high-temperature corrosive flue gasses, which has severe effects even on acid-resistant stainless steel.

A plastic mixture was manufactured by mixing 70 wt% Mesh 240 SIKA 1 SiC particles from Arendal, with 10 wt% SiC having a particle size of about 1 µm. Plasticity was obtained by adding to the mixture 6 wt% Methyl cellulose (dry powder, e.g. Tylose from Hoechst), 18 wt% water and 6 wt% ethanol. The dry powder components were mixed, typically in batches of a size of 10 to 20 kg, for 30 min., whereafter the ethanol was added, and the mixture was mixed for another 10 min. Then the last ingredient, water, was added and the resulting paste was puddled for 30 min. The final paste appeared stiff but plastic, and it was adequate for plastic forming methods, such as extrusion or roller and jigger casting. The resulting paste may be stored for several weeks before forming/drying and sintering.

The plastic paste was fed to a standard extruder comprising a plunger and a screw barrel interconnected by a vacuum chamber. The extrusion operation pressure was in the order of 15-35 bar, and the temperature was typically in the range 25-45°C.

By the extrusion of the filter segments, often called green bodies, a number of geometries have been produced. One preferred geometry of the filter segments is seen in Fig. 1, another is seen in Fig. 12. After extrusion, the green bodies were dried for 10 to 200 hours under controlled humidity (40-90 %rh) and temperature (room temperature to 100°C). The linear drying shrinkage of the green bodies usually amounts to 1-2%.

The geometry of the green body and, thus, the final filter segment is defined by the extrusion die. If a filter segment having the structure of Fig. 12 is desired, the extrusion die should be adapted to also form the grooves on the radially extending sides of the filter segments. After extrusion and either before or after drying the green bodies, the material forming the grooves at the ends 53 and 55 of a green body may be removed by simple tooling. The radially extending surfaces of the green bodies is preferably transformed into a plane surface at or lower than the level of the bottom of the grooves.

The dried green bodies have a high handling strength allowing both machining and arrangement of the green bodies in a furnace. After drying, the channels of the green bodies were alternately closed in one end so as to form the preferred honeycomb structure (See Fig. 14).

Sintering was carried out in a furnace at temperatures up to 2450°C. The binder is removed due to pyrolysis when heated to a temperature in the range of 300-500°C. The atmosphere in the furnace is typically argon buffered by the gaseous species Si/SiO/CO. The sintering of the coarse-particled SiC in the filter segments is enhanced by the presence of the ultra fine-grained SiC either added directly in the paste, or generated from a reaction between the optionally added SiO₂ and/or carbon black (or pyrolyzed binder) also added to the past.

Due to the smaller radii of curvature, the fine-grained SiC particle fraction evaporates before the larger SiC particles constituting the actual filter segment. Subsequently, the evaporated fine-grained particle fraction condenses at the particle contacts between the larger particles giving a full SiC inter-grown porous structure. Thus, as the sintered material is now constituted by the larger SiC particles interconnected by the SiC formed by the evaporated and subsequently condensed fine-grained SiC particles, the initial size and the size distribution of the large SiC particles directly defines the pore size and the porosity of the sintered material. The porosity of the sintered material is in the order of 50% and the pore size is in the order of 35 µm.

This structure has a high physical strength and thermal and electrical conductivity as the filter segment consists substantially of only one material, SiC, and no other materials having less optimal properties are present in the sintered structure. As mentioned above, SiC has a number of superior properties for the use in high-temperature flue gas filtering. As the amount of SiC condensed at the particle boundaries may be controlled by the amount of added fine-grained SiC, strong interconnections in the particle boundaries may be obtained. These strong interconnections also increase the electrical and thermal conductivity of the sintered filter segment.

The thus manufactured filter segments may be directly used in the different above-mentioned embodiments of the filter according to the invention.

If the heating element used in a filter according to the invention has direct electrical contact between the resistance heating element and the surface of the heating element, an electrical short circuit between the heating element and the filter segment may occur. Different methods may be used to prevent this short circuit:

An electrically insulating layer may be placed between the filter segment and the heating element, e.g. in the form of the cement disclosed in Example 3. This cement may also be used when the filter segments are manufactured with grooves as seen in Figs. 12 and 13. Thus, when incorporating a layer of the cement, the heating element of Example 4 may be used in connection with the preferred filter segment without requiring the small wires of the heating element to be electrically insulating. Also a simple coiled heating wire may be used as a heating element.

Alternatively, the outer radially extending faces of the filter segments may be doped with impurities. This doping is typically performed by adding the impurity in the form of a powder to the actual surface before sintering. It is well known that certain impurities will reduce the electrical conductivity of SiC, whereby the surface layer of the filter segments may be made less electrically conducting by way of doping.

If the surface of the present filter segment is doped to have only a small electrical conductivity, this filter segment may be used in connection with all the above-mentioned heating elements without the need of additional electrically insulating layers between the electrical resistance heating means and the filter segments.

As described above, it may be desired to insert a sealing material between the filter segments at one end of the filter and that, therefore, the length of the heating element(s) is smaller than that of the filter segments. If the filter segments incorporate grooves, more of the material forming the grooves may be removed at one end of the filter segments. In this way, the heating elements are able to curve at a position closer to the middle of the filter segments and, consequently, leave room for the sealing material.

## Claims

1. A flue gas filter, in particular for filtering exhaust gas from diesel engines, comprising a casing (14) having an exhaust gas inlet and an exhaust gas outlet and a filter body arranged in the casing, characterized in that the filter body is composed of at least two segments (4) which are of a porous heat-resistant material and which extend in the axial direction of the casing, that the filter segments (4) are arranged adjacent to each other, and that an electrical heating element (6, 16, 28, 34, 40) is arranged in at least one axial interstice between adjacent filter segments (4).

2. A flue gas filter according to claim 1, wherein an electrical heating element (6, 16, 28, 34, 40) is arranged in each axial interstice between adjacent filter segments (4).

3. A flue gas filter according to claim 1 or 2, wherein the electrical heating element (6, 16, 28, 34, 40) comprises a metallic resistance heating means (33, 42).

4. A flue gas filter according to claim 3, wherein the metallic resistance heating means (33, 42) is enclosed in electrically insulating material (46).

5. A flue gas filter according to claim 4, wherein the electrically insulating material constitutes a heat-conductive coating of the metallic resistance heating means (33).

6. A flue gas filter according to claim 5, wherein the heat-conductive coating comprises a ceramic material, such as magnesia, alumina, zirconia or a combination thereof.

7. A flue gas filter according to claim 4, wherein the electrically insulating material is at least partially constituted by an electrically insulating surface of a filter segment (4).

8. A flue gas filter according to claim 7, wherein the electrical heating element (6, 16, 28) comprises a flexible metallic resistance heating element (34, 40) in heat-conductive contact with electrically insulating surfaces of adjacent filter segments (4).

9. A flue gas filter according to claim 8, wherein the flexible metallic resistance heating element (34, 40) is constituted by a coiled wire (38, 42).

10. A flue gas filter according to claim 8, wherein the flexible metallic resistance heating element (34, 40) is constituted by knitted threads (38).

11. A flue gas filter according to any of claims 8-10, wherein the electrical heating element (6, 16, 28) comprises a flexible core material (36), such as a fibrous material or a thread material.

12. A flue gas filter according to claim 3, wherein the metallic resistance heating means is constituted by a plate or foil which is optionally cut or cauterized into a meandering or labyrinth pattern.

13. A flue gas filter according to any of the preceding claims, wherein the cross-section of each segment (4) is shaped substantially as a circle sector, the segments (4) together cross-sectionally substantially constituting a circle.

14. A flue gas filter according to claim 13, wherein the number of segments (4) is an even number larger than two.

15. A flue gas filter according to claim 14, wherein each segment (4) has a cross section as a circle quadrant.

16. A flue gas filter according to any of claims 13-15, wherein each filter segment (4) is in heat-conductive contact with a heating element (6, 16, 28) along each of its radially extending faces.

17. A flue gas filter according to claims 15 and 16, wherein the heating element (28) has a cross section of a substantially symmetric right-angled cross.

18. A flue gas filter according to any of claims 14-16, wherein each heating element (6, 16, 28) has an angular cross section, the angle corresponding to the angle between the radial faces of the corresponding filter segment (4), the number of heating elements (6, 16, 28) being half the number of segments (4), the heating elements (6, 16, 28) embracing every circumferentially second filter segment (4).

19. A flue gas filter according to any of claims 8-11, wherein at least one of two opposite radial faces of two adjacent filter segments (4) has at least one indentation (54) receiving the round metallic resistance heating elements (34, 42).

20. A flue gas filter according to claim 19, wherein two opposite radial faces of two adjacent filter segments (4) have matching indentations (54) receiving the heating elements (34, 42).

21. A flue gas filter according to claim 19 or 20, wherein the indentation or indentations (54) are substantially parallel to the axis of the segment (4) or segments (4).

22. A flue gas filter according to claim 21, wherein a segment face having an indentation or indentations (54) has at least one end portion (53, 55) which is constituted by a substantially plane surface the level of which is substantially the level of the bottom of the indentation or indentations (54).

23. A flue gas filter according to claim 22, wherein both end portions (53, 55) of the segment face are constituted by a substantially plane surface the level of which is substantially the level of the bottom of the indentation or indentations (54).

24. A flue gas filter according to any of the preceding claims, wherein the filter segments (4) are made of a porous ceramic material.

25. A flue gas filter according to claim 24, wherein the porous ceramic material is a particle-based ceramic material in which the pore size is substantially determined by the size of the particles.

26. A flue gas filter according to claim 25, wherein the particle-based ceramic material is SiC.

27. A flue gas filter according to any of claims 24-26, wherein one of the axial faces of each filter segment (4) constitutes a gas inlet side surface (62), the opposite axial face constituting a gas outlet side surface (70), a first plurality of blind filtration cavities (60) extending into the filter segment (4) from the gas inlet side surface (62) and a second plurality of blind filtration cavities (68) extending into the filter segment (4) from the gas outlet side surface (70), the blind filtration cavities of the first and second pluralities being arranged spaced apart and mutually juxtaposed.

28. A flue gas filter according to claim 27, wherein the blind filtration cavities are substantially parallel to the longitudinal axis of the filter segment (4).

29. A filter body for use in a flue gas filter according to claim 1, in particular for filtering exhaust gas from diesel engines, characterized in that the filter body is composed of at least two segments (4) which are of a porous heat-resistant material and which extend in the axial direction, that the filter segments (4) are arranged adjacent to each other, and that an electrical heating element (6, 16, 28, 34, 40) is arranged in at least one axial interstice between adjacent filter segments (4).

30. A filter body according to claim 29, wherein an electrical heating element (6, 16, 28, 34, 40) is arranged in each axial interstice between adjacent filter segments (4).

31. A segment for use in a filter body according to claim 30, the segment (4) having a cross section substantially as a circle sector, at least one radial face having at least one indentation (54) receiving a round metallic heating element (34, 42).

32. A segment according to claim 31, wherein the at least one indentation (54) is substantially parallel to the axis of the segment (4).

33. A segment according to claim 32, wherein a segment face having at least one indentation (54) has at least one end portion (53, 55) which is constituted by a substantially plane surface the level of which is substantially the level of the bottom of the indentation or indentations (54).

34. A segment according to claim 33, wherein both end portions (53, 55) of the segment face are constituted by a substantially plane surface the level of which is substantially the level of the bottom of the indentation or indentations (54).

35. A segment according to any of claims 31-34, the segment (4) being made of a porous ceramic material.

36. A segment according to claim 35, wherein the porous ceramic material is a particle-based ceramic material in which the pore size is substantially determined by the size of the particles.

37. A segment according to claim 36, wherein the particle-based ceramic material is SiC.

## Patentansprüche

1. Rauchgasfilter, insbesondere zum Filtern von Abgasen aus Dieselmotoren, der ein Gehäuse (14) mit einem Abgaseinlaß und einem Abgasauslaß sowie einen in dem Gehäuse angeordneten Filterkörper umfaßt, **dadurch gekennzeichnet, daß** der Filterkörper aus wenigstens zwei Segmenten (4) zusammengesetzt ist, die aus einem porösen, wärmebeständigen Material bestehen und sich in der axialen Richtung des Gehäuses erstrecken, daß die Filtersegmente (4) aneinander angrenzend angeordnet sind, und daß ein elektrisches Heizelement (6,16,28,34,40) in wenigstens einem axialen Zwischenraum zwischen aneinandergrenzenden Filtersegmenten (4) angeordnet ist.

2. Rauchgasfilter nach Anspruch 1, wobei ein elektrisches Heizelement (6,16,28,34,40) in jedem axialen Zwischenraum zwischen aneinandergrenzenden Filtersegmenten (4) angeordnet ist.

3. Rauchgasfilter nach Anspruch 1 oder 2, wobei das elektrische Heizelement (6,16,28,34,40) eine aus Metall bestehende Widerstandsheizeinrichtung (33,42) umfaßt.

4. Rauchgasfilter nach Anspruch 3, wobei die aus Metall bestehende Widerstandsheizeinrichtung (33,42) in elektrisch isolierendem Material (46) eingeschlossen ist.

5. Rauchgasfilter nach Anspruch 4, wobei das elektrisch isolierende Material eine wärmeleitende Beschichtung der aus Metall bestehenden Widerstandsheizeinrichtung (33) bildet.

6. Rauchgasfilter nach Anspruch 5, wobei die wärmeleitende Beschichtung ein Keramikmaterial, wie beispielsweise Magnesiumoxid, Aluminiumoxid, Zirkoniumoxid oder eine Kombination daraus, umfaßt.

7. Rauchgasfilter nach Anspruch 4, wobei das elektrisch isolierende Material wenigstens teilweise durch eine elektrisch isolierende Fläche eines Filtersegmentes (4) gebildet wird.

8. Rauchgasfilter nach Anspruch 7, wobei das elektrische Heizelement (6,16,28) ein flexibles, aus Metall bestehendes Widerstandsheizelement (34,40) in wärmeleitendem Kontakt mit elektrisch isolierenden Flächen aneinandergrenzender Filtersegmente (4) umfaßt.

9. Rauchgasfilter nach Anspruch 8, wobei das flexible, aus Metall bestehende Widerstandsheizelement (34,40) durch einen Wendeldraht (38,42) gebildet wird.

10. Rauchgasfilter nach Anspruch 8, wobei das flexible, aus Metall bestehende Widerstandsheizelement (34,40) durch gewirkte Fäden (38) gebildet wird.

11. Rauchgasfilter nach einem der Ansprüche 8 - 10, wobei das elektrische Heizelement (6,16,28) ein flexibles Kernmaterial (36), wie beispielsweise ein Fasermaterial oder ein Fadenmaterial, umfaßt.

12. Rauchgasfilter nach Anspruch 3, wobei die aus Metall bestehende Widerstandsheizeinrichtung durch eine Platte bzw. Folie gebildet wird, die wahlweise in eine Mäander- oder Labyrinthstruktur geschnitten oder geätzt wird.

13. Rauchgasfilter nach einem der vorangehenden Ansprüche, wobei der Querschnitt jedes Segments (4) im wesentlichen als Kreissektor geformt ist, wobei die Segmente (4) zusammen im Querschnitt im wesentlichen einen Kreis bilden.

14. Rauchgasfilter nach Anspruch 13, wobei die Anzahl der Segmente (4) eine gerade Zahl größer als zwei ist.

15. Rauchgasfilter nach Anspruch 14, wobei jedes Filtersegment (4) einen Querschnitt eines Kreisquadranten hat.

16. Rauchgasfilter nach einem der Ansprüche 13 - 15, wobei jedes Filtersegment (4) in wärmeleitendem Kontakt mit einem Heizelement (6,16,28) an jeder seiner sich radial erstreckenden Flächen ist.

17. Rauchgasfilter nach Anspruch 15 und 16, wobei das Heizelement (28) einen Querschnitt eines im wesentlichen symmetrischen rechtwinkligen Kreuzes hat.

18. Rauchgasfilter nach einem der Ansprüche 14 - 16, wobei jedes Heizelement (6,16,28) einen winkligen Querschnitt hat, wobei der Winkel dem Winkel zwischen den radialen Flächen des entsprechenden Filtersegmentes (4) entspricht, die Anzahl von Heizelementen (6,16,28) der Hälfte der Anzahl von Segmenten (4) entspricht, wobei die Heizelemente (6,16,28) in Umfangsrichtung jedes zweite Filtersegment (4) umschließen.

19. Rauchgasfilter nach einem der Ansprüche 8 - 18, wobei wenigstens eine der beiden einander gegenüberliegenden radialen Flächen zweier aneinandergrenzender Filtersegmente (4) wenigstens eine Vertiefung (54) aufweist, die die runden, aus Metall bestehenden Widerstandsheizelemente (34,42) aufnimmt.

20. Rauchgasfilter nach Anspruch 19, wobei zwei einander gegenüberliegende radiale Flächen zweier aneinandergrenzender Filtersegmente (4) passende Vertiefungen (54) aufweisen, die die Heizelemente (34,42) aufnehmen.

21. Rauchgasfilter nach Anspruch 19 oder 20, wobei die Vertiefung bzw. Vertiefungen (54) im wesentlichen parallel zur Achse des Segmentes (4) bzw. der Segmente (4) sind.

22. Rauchgasfilter nach Anspruch 21, wobei eine Segmentfläche, die eine Vertiefung bzw. Vertiefungen (54) aufweist, wenigstens einen Endabschnitt (53,55) hat, der durch eine im wesentlichen plane Fläche gebildet wird, deren Niveau im wesentlichen dem Niveau des Bodens der Vertiefung bzw. Vertiefungen (54) entspricht.

23. Rauchgasfilter nach Anspruch 22, wobei beide Endabschnitte (53,55) der Segmentfläche durch eine im wesentlichen plane Fläche gebildet werden, deren Niveau im wesentlichen dem Niveau des Bodens der Vertiefung bzw. Vertiefungen (54) entspricht.

24. Rauchgasfilter nach einem der vorangehenden Ansprüche, wobei die Filtersegmente (4) aus einem porösen Keramikmaterial bestehen.

25. Rauchgasfilter nach Anspruch 24, wobei das poröse Keramikmaterial ein Keramikmaterial auf Partikelbasis ist, dessen Porengröße im wesentlichen durch die Größe der Partikel bestimmt wird.

26. Rauchgasfilter nach Anspruch 25, wobei es sich bei dem Keramikmaterial auf Partikelbasis um SiC handelt.

27. Rauchgasfilter nach einem der Ansprüche 24 - 26, wobei eine der axialen Flächen jedes Filtersegments (4) eine Gaseinlaßseitenfläche (62) bildet, wobei die gegenüberliegende axiale Fläche eine Gasauslaßseitenfläche (70) bildet, wobei sich eine erste Vielzahl von Blind-Filtrierhohlräumen (60) von der Gaseinlaßseitenfläche (62) aus in das Filtersegment (4) erstreckt, und sich eine zweite Vielzahl von Blind-Filtrierhohlräumen (68) von der Gasauslaßseitenfläche (70) aus in das Filtersegment (4) erstreckt, wobei die Blind-Filtrierhohlräume der ersten und der zweiten Vielzahl beabstandet und nebeneinander angeordnet sind.

28. Rauchgasfilter nach Anspruch 27, wobei die Blind-Filtrierhohlräume im wesentlichen parallel zur Längsachse des Filtersegments (4) sind.

29. Filterkörper zum Einsatz in einem Rauchgasfilter gemäß Anspruch 1, insbesondere zum Filtern von Abgasen aus Dieselmotoren, **dadurch gekennzeichnet, daß** der Filterkörper aus wenistens zwei Segmenten (4) zusammengesetzt ist, die aus einem porösen, wärmebeständigen Material bestehen und sich in der axialen Richtung erstrecken, daß die Filtersegmente (4) aneinander angrenzend angeordnet sind, und daß ein elektrisches Heizelement (6,16,28,34,40) in wenigstens einem axialen Zwischenraum zwischen aneinandergrenzenden Filtersegmenten (4) angeordnet ist.

30. Filterkörper nach Anspruch 29, wobei ein elektrisches Heizelement (6,16,28,34,40) in jedem axialen Zwischenraum zwischen aneinandergrenzenden Filtersegmenten (4) angeordnet ist.

31. Segment zum Einsatz in einem Filterkörper nach Anspruch 30, wobei das Segment (4) im Querschnitt im wesentlichen ein Kreissektor ist, wobei wenigstens eine radiale Fläche wenigstens eine Vertiefung (54) aufweist, die ein rundes, aus Metall bestehendes Heizelement (34,42) aufnimmt.

32. Segment nach Anspruch 31, wobei die wenigstens eine Vertiefung (54) im wesentlichen parallel zur Achse des Segmentes (4) ist.

33. Segment nach Anspruch 32, wobei eine Segmentfläche, die wenigstens eine Vertiefung (54) aufweist, wenigstens einen Endabschnitt (53,55) hat, der durch eine im wesentlichen plane Fläche gebildet wird, deren Niveau im wesentlichen dem Niveau des Bodens der Vertiefung bzw. Vertiefungen (54) entspricht.

34. Segment nach Anspruch 33, wobei beide Endabschnitte (53,55) der Segmentfläche durch eine im wesentlichen plane Fläche gebildet werden, deren Niveau im wesentlichen dem Niveau des Bodens der Vertiefung bzw. Vertiefungen (54) entspricht.

35. Segment nach einem der Ansprüche 31 - 34, wobei das Segment aus einem porösen Keramikmaterial besteht.

36. Segment nach Anspruch 35, wobei das poröse Keramikmaterial ein Keramikmaterial auf Partikelbasis ist, dessen Porengröße im wesentlichen durch die Größe der Partikel bestimmt wird.

37. Segment nach Anspruch 36, wobei es sich bei dem Keramikmaterial auf Partikelbasis um SiC handelt.

## Revendications

1. Filtre de gaz de combustion, en particulier pour filtrer des gaz d'échappement provenant de moteurs diesel, comprenant un boîtier (14) comportant une entrée de gaz d'échappement et une sortie de gaz d'échappement et un corps de filtre agencé dans le boîtier, caractérisé en ce que le corps de filtre est constitué par au moins deux segments (4) qui sont en un matériau résistant thermiquement, poreux, et qui s'étendent suivant la direction axiale du boîtier, en ce que les segments de filtre (4) sont agencés de manière à être adjacents les uns aux autres et en ce qu'un élément de chauffage électrique (6, 16, 28, 34, 40) est agencé dans au moins un interstice axial entre des segments de filtre adjacents (4).

2. Filtre de gaz de combustion selon la revendication 1, dans lequel un élément de chauffage électrique (6, 16, 28, 34, 40) est agencé dans chaque interstice axial entre des segments de filtre adjacents (4).

3. Filtre de gaz de combustion selon la revendication 1 ou 2, dans lequel l'élément de chauffage électrique (6, 16, 28, 34, 40) comprend un moyen de chauffage à résistance métallique (33, 42).

4. Filtre de gaz de combustion selon la revendication 3, dans lequel le moyen de chauffage à résistance métallique (33, 42) est renfermé dans un matériau isolant électriquement (46).

5. Filtre de gaz de combustion selon la revendication 4, dans lequel le matériau isolant électriquement constitue un revêtement conducteur thermiquement du moyen de chauffage à résistance métallique (33).

6. Filtre de gaz de combustion selon la revendication 5, dans lequel le revêtement conducteur thermiquement comprend un matériau céramique tel que de la magnésie, de l'alumine, de la zircone ou une combinaison de celles-ci.

7. Filtre de gaz de combustion selon la revendication 4, dans lequel le matériau isolant électriquement est au moins partiellement constitué par une surface isolante électriquement d'un segment de filtre (4).

8. Filtre de gaz de combustion selon la revendication 7, dans lequel l'élément de chauffage électrique (6, 16, 28) comprend un élément de chauffage à résistance métallique flexible (34, 40) en contact de conduction thermique avec des surfaces isolantes électriquement de segments de filtre adjacents (4).

9. Filtre de gaz de combustion selon la revendication 8, dans lequel l'élément de chauffage à résistance métallique flexible (34, 40) est constitué par un fil bobiné (38, 42).

10. Filtre de gaz de combustion selon la revendication 8, dans lequel l'élément de chauffage à résistance métallique flexible (34, 40) est constitué par des fils tricotés (38).

11. Filtre de gaz de combustion selon l'une quelconque des revendications 8 à 10, dans lequel l'élément de chauffage électrique (6, 16, 28) comprend un matériau d'âme flexible (36) tel qu'un matériau fibreux ou un matériau filaire.

12. Filtre de gaz de combustion selon la revendication 3, dans lequel le moyen de chauffage à résistance métallique est constitué par une plaque ou une feuille qui est optionnellement découpée physiquement ou par gravure selon un motif en méandres ou en labyrinthe.

13. Filtre de gaz de combustion selon l'une quelconque des revendications précédentes, dans lequel la section en coupe de chaque segment (4) est conformée sensiblement en tant que secteur de cercle, les segments (4) constituant ensemble, en coupe transversale, sensiblement un cercle.

14. Filtre de gaz de combustion selon la revendication 13, dans lequel le nombre de segments (4) est un nombre pair supérieur à deux.

15. Filtre de gaz de combustion selon la revendication 14, dans lequel chaque segment (4) présente une section en coupe qui est un quadrant de cercle.

16. Filtre de gaz de combustion selon l'une quelconque des revendications 13 à 15, dans lequel chaque segment de filtre (4) est en contact de conduction thermique avec un élément de chauffage (6, 16, 28) le long de chacune de ses faces qui s'étendent radialement.

17. Filtre de gaz de combustion selon les revendications 15 et 16, dans lequel l'élément de chauffage (28) présente une section en coupe ayant la forme d'une croix à angle droit sensiblement symétrique.

18. Filtre de gaz de combustion selon l'une quelconque des revendications 14 à 16, dans lequel chaque élément de chauffage (6, 16, 28) présente une section en coupe anguleuse, l'angle correspondant à l'angle entre les faces radiales du segment de filtre correspondant (4), le nombre d'éléments de chauffage (6, 16, 28) étant égal à la moitié du nombre de segments (4), les éléments de chauffage (6, 16, 28) embrassant chaque circonférentiellement second segment de filtre (4).

19. Filtre de gaz de combustion selon l'une quelconque des revendications 8 à 11, dans lequel au moins l'une de deux faces radiales opposées de deux segments de filtre adjacents (4) présente au moins une indentation (54) qui reçoit les éléments de chauffage à résistance métallique ronds (34, 42).

20. Filtre de gaz de combustion selon la revendication 19, dans lequel deux faces radiales opposées de deux segments de filtre adjacents (4) comportent des indentations conjuguées (54) recevant les éléments de chauffage (34, 42).

21. Filtre de gaz de combustion selon la revendication 19 ou 20, dans lequel l'indentation ou les indentations (54) sont sensiblement parallèles à l'axe du segment (4) ou des segments (4).

22. Filtre de gaz de combustion selon la revendication 21, dans lequel une face de segment comportant une indentation ou des indentations (54) comprend au moins une partie d'extrémité (53, 55) qui est constituée par une surface sensiblement plane dont le niveau est sensiblement le niveau du fond de l'indentation ou des indentations (54).

23. Filtre de gaz de combustion selon la revendication 22, dans lequel les deux parties d'extrémité (53, 55) de la face de segment sont constituées par une surface sensiblement plane dont le niveau est sensiblement le niveau du fond de l'indentation ou des indentations (54).

24. Filtre de gaz de combustion selon l'une quelconque des revendications précédentes, dans lequel les segments de filtre (4) sont réalisés en un matériau céramique poreux.

25. Filtre de gaz de combustion selon la revendication 24, dans lequel le matériau céramique poreux est un matériau céramique à base de particules dans lequel la taille des pores est sensiblement déterminée par la taille des particules.

26. Filtre de gaz de combustion selon la revendication 25, dans lequel le matériau céramique à base de particules est du SiC.

27. Filtre de gaz de combustion selon l'une quelconque des revendications 24 à 26, dans lequel l'une des faces axiales de chaque segment de filtre (4) constitue une surface de côté d'entrée de gaz (62), la face axiale opposée constituant une surface de côté de sortie de gaz (70), une première pluralité de cavités de filtration borgnes (60) s'étendant à l'intérieur du segment de filtre (4) depuis la surface de côté d'entrée de gaz (62) et une seconde pluralité de cavités de filtration borgnes (68) s'étendant dans le segment de filtre (4) depuis la surface de côté de sortie de gaz (70), les cavités de filtration borgnes des première et seconde pluralités étant agencées de manière à être espacées et mutuellement juxtaposées.

28. Filtre de gaz de combustion selon la revendication 27, dans lequel les cavités de filtration borgnes sont sensiblement parallèles à l'axe longitudinal du segment de filtre (4).

29. Corps de filtre pour une utilisation dans un filtre de gaz de combustion selon la revendication 1, en particulier pour filtrer des gaz d'échappement provenant de moteurs diesel, caractérisé en ce que le corps de filtre est composé par au moins deux segments (4) qui sont en un matériau résistant thermiquement, poreux, et qui s'étendent suivant la direction axiale, en ce que les segments de filtre (4) sont agencés de manière à être adjacents les uns aux autres et en ce qu'un élément de chauffage électrique (6, 16, 28, 34, 40) est agencé dans au moins un interstice axial entre des segments de filtre adjacents (4).

30. Corps de filtre selon la revendication 29, dans lequel un élément de chauffage électrique (6, 16, 28, 34, 40) est agencé dans chaque interstice axial entre des segments de filtre adjacents (4).

31. Segment pour une utilisation dans un corps de filtre selon la revendication 30, le segment (4) présentant une section en coupe sensiblement en forme de secteur de cercle, au moins une face radiale comportant au moins une indentation (54) recevant un élément de chauffage métallique rond (34, 42).

32. Segment selon la revendication 31, dans lequel l'au moins une indentation (54) est sensiblement parallèle à l'axe du segment (4).

33. Segment selon la revendication 32, dans lequel une face de segment comportant au moins une indentation (54) comporte au moins une partie d'extrémité (53, 55) qui est constituée par une surface sensiblement plane dont le niveau est sensiblement le niveau du fond de l'indentation ou des indentations (54).

34. Segment selon la revendication 33, dans lequel les deux parties d'extrémité (53, 55) de la face de segment sont constituées par une surface sensiblement plane dont le niveau est sensiblement le niveau du fond de l'indentation ou des indentations (54).

35. Segment selon l'une quelconque des revendications 31 à 34, le segment (4) étant réalisé en un matériau céramique poreux.

36. Segment selon la revendication 35, dans lequel le matériau céramique poreux est un matériau céramique à base de particules dans lequel la taille des pores est sensiblement déterminée par la taille des particules.

37. Segment selon la revendication 36, dans lequel le matériau céramique à base de particules est du SiC.
